# EUROPEAN PATENT APPLICATION

(11) **EP 0 844 610 A1**
(43) Date of publication of application: **27.05.1998**
(21) Application number: 97119911.2
(22) Date of filing: 13.11.1997
(51) Int. Cl.: G11B 15/62

(54) **Tape-to-head contacting arrangement**

(30) Priority: 20.11.1996 US 754266
(71) Applicant: Tandberg Data ASA, 0884 Oslo (NO)
(72) Inventor: Stavdahl, Hans, 1165 Oslo (NO)
(74) Representative: Tönhardt, Marion, Dr.

(57) **Abstract**

A pressure pad assembly for a tape drive including a resilient pressure pad mounted on a spring plate, the spring plate connected at its base end to a spring backing plate which is pivotally mounted to the tape drive structure, and a conical bulb arranged between the spring backing plate and the spring plate to impart a concentrated force onto the spring plate directly behind the pressure pad to allow vertical self balancing of the pressure pad with respect to the magnetic tape pressed against the magnetic head. The spring plate includes a reduced section near its base end to allow some torsional flexibility for the vertical self balancing. The spring plate and spring backing plate assembly retains horizontal rigidity about a vertical axis transverse to the tape running direction to allow the pressure pad assembly to be used for changing friction conditions and for bidirectional tape transport. The pressure pad assembly can be electronically controlled to be activated and deactivated selectively. A plurality of pressure pad assemblies can be used for multiple head tape drives. A supporting screw can be used to give an increased horizontal rigidity of the pad or a fine adjustment for the pad about the vertical axis.

## Description

### BACKGROUND OF THE INVENTION

The present invention relates to tape drives and in particular to a mechanism for holding a magnetic tape to a magnetic head as the tape moves across a surface of a magnetic head.

In a tape drive, a coiled length of magnetic tape contained for example on one or two reels in a tape cassette, is circulated past a magnetic head for reading magnetic signals from the tape or for writing magnetic signals onto the tape. Some tape drives extract the magnetic tape from the cassette housing such as described in U.S. Patents 4,933,788 and 5,430,586. Other tape drives press the magnetic head to a length of tape which remains in the cassette housing such as disclosed in U.S. Patent 5,323,280.

It is important for performance considerations in a magnetic tape drive that the magnetic tape is slid across a magnetic head with a constant contact pressure. In some drives, this is achieved by wrapping the tape around a front of the head and ensuring a sufficient tape tension at the magnetic head. This tape tension can be achieved by controlling the supply and take up reels. This tension ensures acceptable tape-to-head contact pressure. Another method of assuring sufficient tape-to-head contact is to provide a pressure pad which presses the circulating magnetic tape against the magnetic head. Such a pressure pad has been conventionally used in audio tape cassettes as an integral part of the tape cassette itself. Typically, the foam or felt pressure pad is suspended on a leaf spring and is pressed against the tape by the inserted magnetic head of the tape drive mechanism.

Pressure pads for pressing a magnetic tape against a head wherein the pressure pad is mounted on a leaf spring in a reel-to-reel type magnetic tape recorder are disclosed for example in U.S. Patent 2,686,230, U.S. Patent 2,864,621, or U.S. Patent 3,372,938. U.S. Patent 3,378,266 discloses, in a reel to reel tape recorder, a pressure pad 44 with a backing spring to be moved and positioned to press a magnetic tape to a magnetic head.

In the known pressure pads for magnetic heads, the pressure pads are made of elastic material which distributes the pad force throughout the pad area. However, in bidirectional tape drives the tape is circulated in both directions for reading and writing. In prior known pressure pads, a spring plate urged by a spring toward the head against the pressure pad is made soft. Such a soft backing plate however is detrimental to a two direction movement of tape in a tape drive, especially when a complex head requires the pad pressure to be equally distributed over a front of the head.

U.S. Patent 4,663,687 describes a bidirectional magnetic tape drive with dual pressure pads. In this patent, it is described as desirable to allow the pressure pads to rotate slightly so that the leading portions of the pressure pads thereby exert greater pressure on the tape than the trailing portions. The friction between the moving tape and the pressure pads causes the pressure pad carriers to rotate slightly, the upstream or leading portions of the pressure pads thereby applying more pressure on the tape on the downstream or trailing portions. This has the proposed effect of more completely squeezing out the film of air between the head surface and the tape to provide a claimed improvement in tape-to-head compliance. However, a structure for balancing laterally the tape along its width while maintaining a relatively stiff longitudinal pressure pad support is not disclosed.

### SUMMARY OF THE INVENTION

It is an object of the present invention to provide a pressure pad assembly for a tape drive to press magnetic tape to a magnetic head. It is an object of the invention to provide a pressure pad assembly which allows for a bidirectional tape transport for reading from, and writing to a magnetic tape by a magnetic head. It is an object of the invention to make the pressure pad assembly self balancing vertically, and stiff horizontally. It is an object of the invention to make the pressure pad assembly adjustable with respect to the magnetic head.

It is an object of the invention to electronically control the activation of the pressure pad, or if two or more pressure pads are provided for multiple magnetic heads, to selectively control the activation of each pad. It is an object of the invention to electronically control the activation of the pressure pad(s) during any combination of writing or reading or spooling (rewinding or fast forward) or during any change of direction or during starting or stopping.

The objects of the invention are achieved by a pressure pad for pressing a magnetic tape against a magnetic head, the pressure pad secured by a spring plate which is itself screw fastened to a spring backing plate. A coil spring is provided between the spring backing plate and stationary structure of the tape drive to urge the spring backing plate against a spring plate to press the pressure pad against the tape, against the magnetic head.

The pressure pad is a soil felt or sponge like member. The spring plate is configured to be resiliently conforming and self balancing about an axis parallel to the tape transport direction. However, the spring plate is made stiff horizontally, that is, about an axis transverse to the tape transport direction, typically the vertical axis. This stiffness is necessary to allow the friction force between the tape and the pad to change over time and to be accommodated for both directions of tape transport using the same pad. To allow the spring plate to self balance vertically while retaining horizontal stiffness, the spring backing plate is provided with a conical protrusion or bulb which presses the spring plate at a position opposing the pad and at a transverse position or elevation, corresponding to a center line of the magnetic tape. This allows the torsionally resilient spring plate to pivot about the pressing point of the bulb to self balance vertically.

The spring plate, at an opposite end to the pressure pad, is attached to the spring backing plate by a screwed connection. Between the pressure pad and the screwed connection, the spring plate includes a reduced width area or tapered area which allows for the resilient self balancing of the pressure pad. However, the reduced section is not so reduced as to significantly effect the horizontal rigidity of the pressure pad assembly to resist tape friction induced force from either direction.

The spring backing plate is pivotally mounted to the tape drive structure at an end opposite to the bulb and near to the screwed connection of the spring plate. On a side of the spring backing plate opposite the bulb is arranged a coil spring for urging the bulb and thus the pressure pad against the tape and against the magnetic head. Adjacent the bulb is a tab, providing a connection point for activation and deactivation control of the pressure pad arrangement.

During operation of the tape drive, when it is not desirable to have the magnetic tape pressed to the particular magnetic head, such as during writing or reading by another head, or spooling such as rewinding or fast forwarding, or during change of tape direction, or during starting or stopping, the spring backing plate can be retracted, easing pressure from the bulb against the spring plate and pivoting both the spring plate and spring backing plate away from the magnetic tape against the urging of the coil spring. The tab is connected to a solenoid or other electromechanical device to exert force on the tab to retract the pressure pad. When controls for the tape drive dictate that the magnetic tape be pressed against the magnetic head, the force on the tab is released and the coil spring pushes the pressure pad against the tape.

The pressure pad and spring plate combination is adjustably attached to the spring backing plate by the use of screws and oversized holes. Thus, the pressure pad can be finally and precisely aligned with the magnetic head and the magnetic tape. Multiple pressure pads according to the present configuration can be used depending on the number of magnetic heads in the tape drive. The pressure pads can be controlled by the controls for the tape drive operation.

### BRIEF DESCRIPTION OF THE DRAWINGS

Figure 1 is a schematic plan view of a tape drive including tape pressure pads of the present invention.

Figure 2 is a exploded isometric view of a pressure pad unit as shown in Figure 1.

Figure 3 is a schematic sectional view of a pressure pad assembly of Figure 1 including controls therefor.

Figure 4 is an exploded isometric view of an alternate embodiment pressure pad unit.

### DETAILED DESCRIPTION OF THE PREFERRED EMBODIMENTS

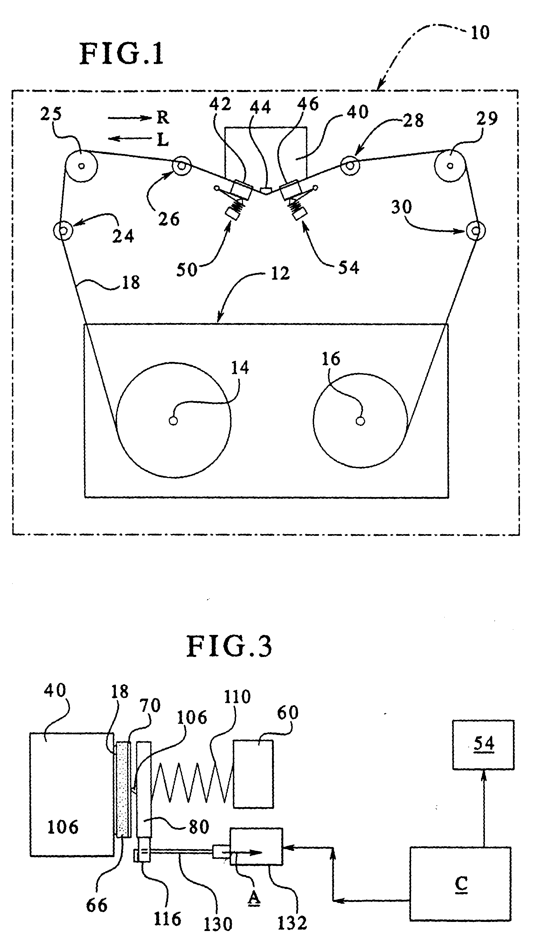

Figure 1 illustrates in schematic fashion a tape drive 10 holding a tape cartridge 12 therein. Tape reels 14 and 16 are provided within the cartridge and have tape 18 spooled thereon extending therebetween. The tape 18 in this embodiment has been extracted such as is known for example in U.S. Patent 4,933,788. The tape is guided by a first tape guide 24, a first roller 25, a second tape guide 26, a third tape guide 28, a second roller 29, and a fourth tape guide 30 from the first reel 14 back to the second reel 16. The tape drive 10 disclosed by the present invention can be a bidirectional tape drive wherein the reels 14, 16 can be selectively chosen as either take up reel or supply reel. That is, the tape can move alternately in the directions R, L. The tape 18 is closely circulating past a magnetic head assembly 40 which includes a first write head 42, a read head 44, and a second write head 46. The magnetic head assembly can be vertically stepped, that is moved vertically to align with selected tracks on the tape.

According to the present invention, the tape 18 is pressed against two of the magnetic heads by pressure pad assemblies 50, 54. According to the invention, the pressure assemblies can be separate units 50, 54 or could be one single unit with a plurality of pads or an elongate pad to press both write heads 42, 46. Although two pressure pad assemblies are shown any number of pressure pad assemblies are encompassed by the invention. Also, the present invention is applicable to tape drives having separate magnetic heads wherein one magnetic head is provided with a pressure pad, or a plurality of separate magnetic heads are each provided with a pressure pad.

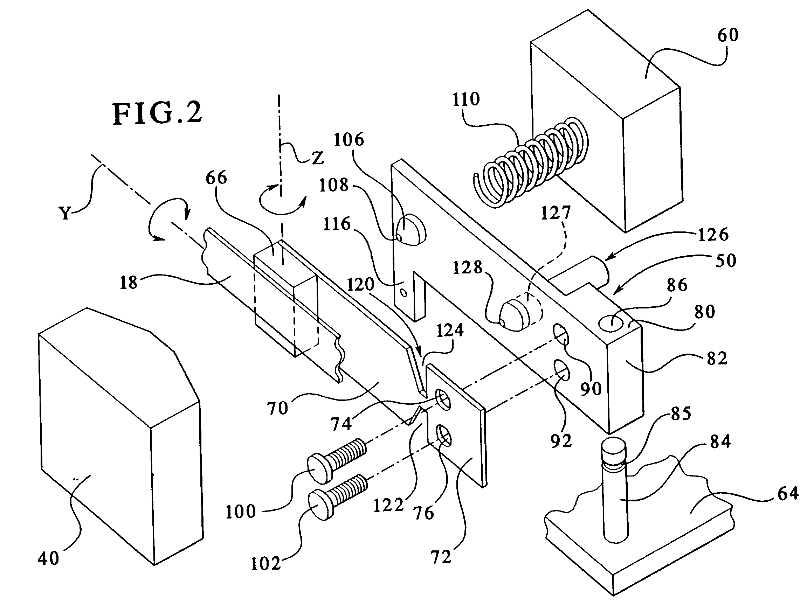

Figure 2 illustrates one of the pressure pad assemblies 50 and is to be understood that the remaining pressure pad 54 would be similarly constructed. The pressure pad assembly 50 is arranged between a stationary spring block 60 and the magnetic head assembly 40. The spring block 60 is shown schematically as a block but for purposes of the description of the invention represents a stationary structure in the tape drive, stationary with respect to the magnetic head 40. The pressure pad assembly 50 is pivotally mounted to a further stationary structure 64 of the tape drive 10 also stationary with respect to the magnetic head 40. What is referred to as "stationary" or "stationary structure" are in reality stationary during the periods of time discussed herein. These "stationary" structures may in fact be movable during other operations of the tape drive.

The pressure pad assembly includes a soft pad 66 comprised of elastic, fibrous, felt or foam or other resilient material. The pad 66 is secured to a spring plate 70 which extends in a longitudinal direction of the tape 18. The spring plate includes at a base end opposite the pad 66, an anchor portion 72 having connection holes 74, 76. A spring backing plate 80 being of a more substantial and rigid construction than the spring plate 70 is pivotally mounted at a base end 82 by receiving a post 84 anchored to the further stationary structure 64 into a hinge hole 86. The post 84 includes a circumferential groove 85 for receiving a spring clip to hold the spring backing plate 80 onto the post 84. The base end 82 includes threaded holes 90, 92 for receiving screws 100, 102 through the holes 74, 76 into the threaded holes 90, 92. The holes 74, 76 are oversized to allow the precise adjustment of the spring plate 70 with respect to the spring backing plate 80.

At a distal end of the spring backing plate 80 is a cone shaped bulb 106 having a relatively pointed end 108 facing toward the pressure pad 66. The cone 106 is arranged on the spring backing plate 80 such that the end 108 presses against the spring plate 70 in a centralized position with respect to the pad 66 and approximately midway of the transverse width of the tape 18.

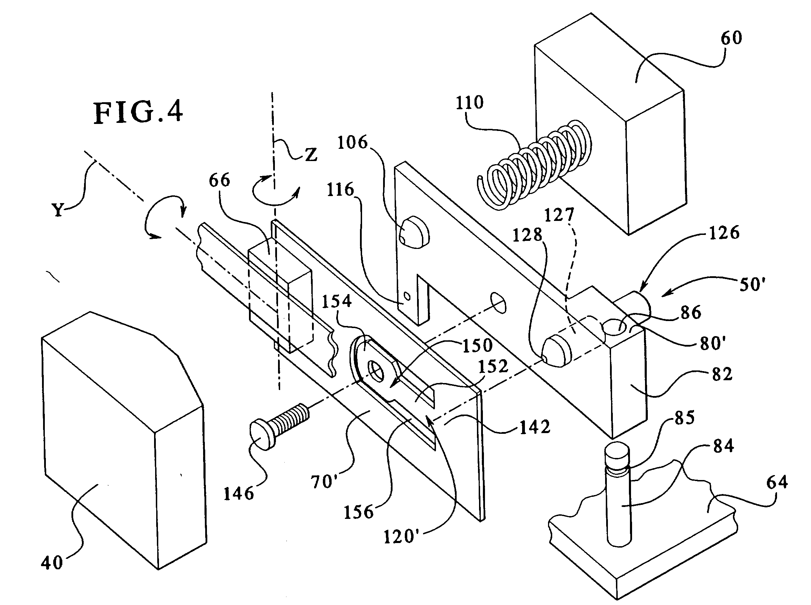

A coil spring 110 is provided between the anchor block 60 and the spring backing plate 80 to bias the spring backing plate 80, particularly the bulb 106, against the spring plate 70 to press the pad 66 against the tape 18 and against the magnetic head assembly 40. The spring 110 is held onto the block 60 and the spring backing plate 80 by conventional means such as by a lug for receiving a free end of the spring into an aperture, or by a socket for receiving the spring (not shown). The spring backing plate 80 also includes an activation tab 116, the function of which is described below in Figure 3.

The spring plate 70 is provided with a reduction section 120 between the holes 74, 76 and the pad 66. This reduction section 120 is formed by notching the width of the spring plate 70 with a first generally triangularly shaped notch 122 and a second opposing triangularly shaped notch 124. The function of this reduction section 120 is to reduce the torsional resistance of the spring plate 70 to allow self balancing of the spring plate 70 about the axis Y, the axis Y being parallel to the longitudinal direction of the tape 18, while retaining sufficient structural bending rigidity about the Z axis, parallel to the transverse direction of the tape 18. Thus, the pad 66 can balance itself about the axis Y by pivoting on the pointed end 108 of the bulb 106 to ensure close vertical compliance between the pad tape and the magnetic head assembly 40. However, because this device is suitable for changing friction coefficient between the tape and the pressure pad, and for bidirectional tape movement, sufficient bending rigidity must be assured to resist the frictional force of the tape passing past the head in either direction which tends to create a different pressure distribution on the front of the head.

An adjusting screw 126 is threaded into a bore 127 of the spring backing plate 80. The screw has a pointed end for pressing the spring 70, or just touching the spring to ensure an even stiffer horizontal positioning direction of the pad 66.

Figure 3 illustrates the invention in section and schematically, wherein the spring 110 biases the spring backing plate 80 via the bulb 106 against the spring plate 70 to vertically balance the pressure pad 66 against the tape 18 and against the magnetic head 40. The bulb 106 is located vertically in this figure at about the halfway point of the tape 18.

The actuation tab 116 is shown connected to a rod 130 for forced movement in the direction A by a solenoid actuator 132. The solenoid actuator can be replaced by alternate actuators which can effect a force on the spring backing plate 80. A voice coil type actuator for example is disclosed in U.S. Patent 2,864,621.

The solenoid actuator 132 is controlled by the tape drive controller C and can be selectively operated to withdraw the pad 66 from the tape 18 during modes of operation where a pressing of the tape to the magnetic head is not desired such as when the particular magnetic head is not in use, during starting, stopping, reversing direction, braking, or reeling such as rewind or fast forward, etc. The controller also can selectively control the other pressure pad assembly 54 (shown in Figure 3 schematically as a box) in a multiple pressure pad or multiple magnetic head arrangement.

Figure 4 shows an alternative arrangement which allows for fine adjusting the pads horizontal angle about the vertical axis Z by using the set screw 126 to press its pointed end against a position 142 on an alternate spring 70'. The alternate spring is connected by a single screw 146 to the alternate spring backing plate 80'. The screw 146 proceeds through a cut out cantilever portion 150 having an arm 152 and a head 154. The cut out generally U-shaped space 156 allows sufficient torsional flexibility of a reduction section 120' about the Y axis to balance the pad 66 against the head while retaining sufficient stiffness about the vertical axis Z to ensure pressure balance on the head in a tape running direction. The remaining components of Figure 4 which have identical reference numbers as Figure 2 serve the same functions.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both separately and in any combination thereof, be material for realising the invention in diverse forms thereof.

## Claims

1. A pressure pad assembly for a tape drive which includes a magnetic head and magnetic tape circulated to closely pass by said magnetic head, comprising:
a mounting structure which is stationary with respect to the tape path of said tape during an operating mode of said tape drive;
a resilient pad;
a spring plate, said resilient pad mounted to one end of said spring plate;
a spring backing plate arranged on a side of said spring plate opposite said pad, said spring backing plate having a protrusion arranged between the spring backing plate and said spring plate and pressable to a side of said spring plate opposite said pad; and
a means for urging said spring backing plate against said spring plate to press said pad against said magnetic tape against said magnetic head.

2. The pressure pad assembly according to claim 1, wherein said spring plate is arranged elongated in a longitudinal direction of said magnetic tape, and said spring backing plate is arranged elongated in the longitudinal direction of said magnetic tape, and said spring plate mounts said pressure pad at one end and is attached at a position located a distance from said one and toward an opposite end to said spring backing plate, and said spring plate and said spring backing plate arranged to pivot toward said magnetic tape under the influence of said means for urging.

3. The pressure pad assembly according to claim 2, further comprising a supporting screw threaded into said spring backing plate and the pointed end of said supporting screw pressed to said spring plate, said supporting screw arranged at a distance from said protrusion.

4. The pressure pad assembly according to claim 2, wherein said spring plate includes a reduced width section between said pad and said opposite end of said spring plate.

5. The pressure pad assembly according to claim 4, wherein said reduced width section comprises two V-shaped notches cut out of a width of said spring plate.

6. The pressure pad assembly according to claim 4, wherein said reduced width section comprises a U-shaped opening cut out of an interior of said spring plate and a central region of said U-shaped opening.

7. The pressure pad assembly according to claim 1, wherein said means for urging comprises a coil spring located between said spring backing plate and said mounting structure.

8. The pressure pad assembly according to claim 1, further comprising a means for dislocating said pad from said tape against the urging of said means for urging, and a control means for activating said means for dislocating.

9. The pressure pad assembly according to claim 1, wherein said spring plate is rigidly held against bending about an axis parallel to a front of said head and transverse to a longitudinal direction of said tape but torsionally flexible about an axis parallel to longitudinal direction of said tape.

10. A tape drive for receiving a cassette having a reel therein, the cartridge having a length of tape coiled around said reel and an opening for extracting a length of said tape from said cartridge, said tape drive having a magnetic head assembly with at least one magnetic head thereon, comprising:
a pressure pad assembly having a resilient pressure pad located in opposition to a length of magnetic tape adjacent said magnetic head;
a spring plate connected at one end to said pressure pad;
a backing plate, said spring plate connected at a distance from said pressure pad to said backing plate, and said backing plate having a plate shaped body with a protrusion extending from said body toward said spring plate at a position opposite a central portion of said pressure pad; and
a means for urging said backing plate to urge said protrusion against said spring plate to urge said pressure pad against said tape, pressing said tape to said magnetic head.

11. The tape drive according to claim 10, further comprising a means for retracting said pressure pad from said magnetic head, and a control means for selectively activating said means for retracting.

12. The tape drive according to claim 10, further comprising at least one additional pressure pad assembly means having an additional pressure pad for pressing said magnetic tape to said magnetic head assembly, and at least one additional retraction means for retracting said additional pressure pad from said magnetic tape, said control means signal connected to said additional retraction means to activate said additional retraction means to selectively retract said additional pressure pad.

13. The tape drive according to claim 10, wherein said spring plate comprises a reduced width section between said pressure pad and said opposite end to increase torsional flexibility of said spring plate.

14. A tape drive for receiving a cartridge having a reel therein, the cartridge having a length of tape coiled around said reel and an opening for extracting a length of said tape from said cartridge, said tape drive having a magnetic head assembly with at least one magnetic head thereon, comprising:
a pressure pad assembly having a resilient pressure pad located in opposition to a length of magnetic tape adjacent said magnetic head;
a spring plate connected at one end to said pressure pad;
a backing plate, said spring plate connected at a distance from said pressure pad to said backing plate, and said backing plate having a means for exerting a centralized contact pressure on said spring plate opposite said pressure pad; and
a means for urging said backing plate to urge said protrusion against said spring plate to urge said pressure pad against said tape, pressing said tape to said magnetic head.

15. The tape drive according to claim 14, wherein said spring plate comprises a reduced width section between said pressure pad and said opposite end to increase torsional flexibility of said spring plate.

16. The tape drive according to claim 15, wherein said reduced width section is formed by two opposing triangular notches in the spring plate.

17. The tape drive according to claim 15, wherein said reduced width section is formed by a generally U-shaped cut out in the spring plate and said spring plate is connected to said spring backing plate at a central region of said U-shaped cut out.

18. The tape drive according to claim 14 comprising a structure which is stationary with respect to a path of said tape during an operating mode of said tape drive, and wherein said means for urging comprises a coil spring compressed between said backing plate and said structure.

19. The tape drive according to claim 18, wherein said means for exerting comprises a conical protrusion extending from said backing plate to said spring plate.

20. The tape drive according to claim 19, wherein said backing plate is pivoted to said structure at a distance from said protrusion.

21. The tape drive according to claim 20, wherein said spring plate comprises a reduced width section between said pressure pad and said opposite end to increase torsional flexibility of said spring plate.

22. The tape drive according to claim 20, further comprising a means for retracting said pressure pad from said magnetic head, and a control means for selectively activating said means for retracting.

23. The tape drive according to claim 22, further comprising at least one additional pressure pad assembly means having an additional pressure pad for pressing said magnetic tape to said magnetic head assembly, and at least one additional retraction means for retracting said additional pressure pad from said magnetic tape, said control means signal connected to said additional retraction means to activate said additional retraction means to selectively retract said additional pressure pad.

24. The tape drive according to claim 23, wherein said second pressure pad assembly means is identically configured as said pressure pad assembly.
